# EUROPEAN PATENT APPLICATION

(11) **EP 3 330 577 A1**
(43) Date of publication of application: **06.06.2018**
(21) Application number: 16201540.8
(22) Date of filing: 30.11.2016
(51) Int. Cl.: F16J 1/22, F16J 7/00

(54) **PISTON - CONNECTING ROD ASSEMBLY**

(71) Applicant: ThyssenKrupp Metalúrgica Campo Limpo Ltda., 13231-900 Campo Limpo Paulista-SP (BR); thyssenkrupp AG, 45143 Essen (DE)
(72) Inventor: Cruz, Robson, 13236-040 Campo Limpo Paulista, Sao Paulo (BR); Atoatte, Almir, 13202-265 Jundiai - Sao Paulo (BR)
(74) Representative: thyssenkrupp Intellectual Property GmbH

(57) **Abstract**

The present invention relates to a piston-connecting rod assembly (1) for an internal combustion engine, comprising a piston (10) with a piston boss (11), in which piston boss (11) a small end (21) of a connecting rod (20) is received without a piston pin, whereas the piston boss (11) features receiving elements (14), said receiving elements (14) defining a receiving plane (15) in which the receiving elements (14) enclose said small end (21) and form a positive fit between the small end (21) and the piston boss (11), whereas the connecting rod (20) features a big end eye (27) defining a big end axis (26). According to the invention, the receiving plane (15) and the big end axis (26) extend parallel to one another.

## Description

### Description

The present invention relates to a piston - connecting rod assembly for an internal combustion engine, comprising a piston with a piston boss, in which piston boss a small end of a connecting rod is received without a piston pin, whereas the piston boss features receiving elements, said receiving elements defining a receiving plane in which the receiving elements enclose said small end and form a positive fit between the small end and the piston boss, whereas the connecting rod features a big end eye defining a big end axis.

### PRIOR ART

EP 2 134 991 B1 discloses a piston - connecting rod assembly for an internal combustion engine comprising a piston with a piston boss for receiving the small end of a connecting rod. The connection is performed without a piston pin, and the small end of the connecting rod features a swivel head, and the swivel head comprises a cylindrical curve contour. The piston boss features a swivel shell which is adapted to the curve contour of the swivel head. The swivel head is inserted into the swivel shell from a lateral direction, and the swivel shell features enclosing sections forming a kind of brackets, which embrace the swivel head with an angle of between 200° and 300°. The swivel head is joined to the shaft of the connecting rod via a neck which is recessed to the extent that the piston and the connecting rod can perform swivel movements relative to each other. Unfortunately, the machining of the swivel head is elaborative and difficult due to the curve contour, which con not be machined by a ball turning process. Also the machining of the swivel shell is elaborative and difficult. According to another disadvantage, the neck with the recessed contour forms a weak point of the connecting rod, and the high loads of efficient internal combustion engines demand components with new materials and/or heavy weight designs to allow structural und thermal resistance as well as smooth surfaces with superfinishing machining to improve wear resistance. Finally, the contact surface between the swivel head and the swivel shell is limited rather to small areas leading to high surface pressures.

According to yet another disadvantage in known pinless piston - connecting rod assemblies the piston boss deformation usually effects harmfully the piston skirt contact with cylinder liner jeopardizing engine durability and robustness. Accordingly, it is one of the objects to decouple the piston boss deformation from the skirt deformation, so that the "breathing" movement within the piston is reduced in particular in the top dead center of the reciprocating movement, when the piston receives inertial forces in a pull-off direction from the connecting rod. The term "breathing" movement means the elastical deformation of the piston due to the forces acting on the piston during operation of the internal combustion engine, especially gas forces and inertial forces.

According to another prior art, piston - connecting rod assemblies are known with a ball head - ball pan connection. This kind of an assembly requires a ball holder as shown in EP 1 529 991 A1. The ball holder is mounted from the bottom side to the piston and completes the spherical ball pan for receiving the ball head of the connecting rod in a positive fit arrangement. Unfortunately, the construction of the piston is a multiple-part-construction which is expensive in manufacturing and assembly.

US 2015/0075456 A1 discloses a piston - connecting rod assembly for an internal combustion engine, comprising a piston with a piston boss, in which piston boss a small end of a connecting rod is received without a piston pin, whereas the piston boss features receiving elements, said receiving elements defining a receiving plane in which the receiving elements enclose said small end and form a positive fit between the small end and the piston boss, whereas the connecting rod features a big end eye defining a big end axis. The positioning into said pocket is performed by inserting the ball head of the small end of the connecting rod into the ball pan cavity in a first mounting position and subsequently the ball head is turned within the ball pan cavity into an operating position. When turning the ball head into the operating position, e.g. by an angle of 90°, a positive fit between the connecting rod and the piston is formed. Unfortunately, the breathing movement within the piston body forms a disadvantage as explained above and the engine durability and robustness is decreased. The breathing movement is caused by a force-transmitting between the ball head and the receiving elements which are formed to enclose the ball head in a receiving plane. The pendular movement of the connecting rod happens in a moving axis which moving axis extends perpendicular to the receiving plane of the receiving elements. Due to the force-transmitting direction between the connecting rod and the piston which forces are acting in the receiving plane, the piston skirt performs a breathing movement leading to an periodic elliptic deformation in the piston skirt. This elliptic deformation leads to a jeopardizing of the engine in view of durability and robustness.

### DISCLOSURE OF THE INVENTION

The invention has the objective to eliminate the above mentioned disadvantages in the prior art. In particular it is an objective of the present invention to provide a piston - connecting rod assembly formed for high loads and featuring a high wear resistance. According to another objective, a harmful effect of the piston skirt contact caused by the piston boss deformation should be minimized.

This objective is achieved by a piston - connecting rod assembly as taught by claim 1 of the present invention. Preferred embodiments of the invention are defined by the subclaims.

The invention discloses that the receiving plane and the big end axis of the big end eye extend parallel to one other.

The core of the invention lies in a rotating of the pendular axis of the connecting rod movement underneath the piston relative to the receiving plane defined by the receiving elements by an angle of 90°, and as a result, the big end axis and the receiving plane as well as the pendular axis in the small end extend parallel to each other or, respectively, lying in one another. The big end axis extends perpendicular through the big end eye. In other words, the big end axis defines the direction of the extension of a crank shaft journal, to which the connecting rod can be assembled to.

The advantage which is achieved by the piston-connecting rod assembly according to the invention is an improved distribution of the force which is transmitted from the small end of the connecting rod into the piston boss, and the breathing movement of the piston skirt is minimized. The effect of minimizing the breathing movement is achieved by force transmitting areas in the piston boss which are located lateral to the receiving plane defined by the receiving elements. In other words, the force is not introduced into the receiving elements itself, but lateral to the receiving elements leading to a homogeneous distribution of the transmitting forces between the piston and the connecting rod into the entire piston. As a result the breathing movement is minimized.

According to yet another improvement embodied in the present invention, the small end of the connecting rod features a ball head modified with opposed flat portions, and the piston boss of the piston features a ball pan cavity with opposed open-side areas, whereas the ball head is inserted into the ball pan cavity by inserting the ball head in a mounting position and by turning the ball head within the ball pan cavity into an operating position. The opposed open-side areas are located lateral to the receiving elements, and the receiving elements are tongue-shaped in order to enclose the small end, and sidewise to the receiving elements the open-side areas are located.

The advantage of the special assembly design is an increased contact area between the ball head forming the small end of the connecting rod and the ball pan cavity. In particular the special assembly by turning the small end with the flat portions into the piston boss results in a better equalization of buckling resistance, and a decoupling of the boss deformation and the skirt deformation is reached and a cylinder liner contact pressure is reduced. The opposed flat portions of the ball head feature a lateral surface distance of the ball head, which distance is measured perpendicular from flat portion to flat portion being arranged opposite to each other. Moreover, the ball pan cavity of the piston boss features an opening width which is defined from tip to tip of the receiving elements. The lateral surface distance from flat portion to flat portion is smaller than the opening width in order to enable the ball head to be inserted into the ball pan cavity. In other words, this leads to the advantage that the connecting rod can be inserted into the ball pan cavity in the mounting position from the bottom direction of the piston, falling together with the shaft axis of the connecting rod when the connecting rod is aligned perpendicular underneath the piston. After introducing the ball head into the ball pan cavity, the connecting rod is turned by an angle of 90° into the operating position. In said operating position the flat portions define a plane for each portion, which is arranged parallel to the receiving plane, only when the connecting rod is aligned perpendicular underneath the piston.

As preferably embodied in the present invention, the opposed flat portions define a small end axis running perpendicular through centers of the opposed flat portions, whereas the small end axis extends perpendicular to the big end axis, respectively. In other words, the opposed flat portions are arranged lateral to the receiving elements of the piston boss when the ball head is turned within the ball pan cavity into the operating position. When the piston - connecting rod assembly according to the present invention is running in an engine, the small end axis oscillates relative to the receiving plane with the reciprocating movement of the connecting rod underneath the piston.

According to yet another improvement of the present invention a securing means is provided, in order to secure the operating position of the ball head within the ball pan cavity. The securing means prevents the piston against a turning back movement from the operating position into the mounting position, and the positive fit of the receiving elements against the small end of the connecting rod is guaranteed.

According to a first embodiment, the securing means comprises a pivot pin, which pivot pin extends in the receiving plane through the receiving elements as well as through the ball head in order to secure the operating position of the ball head within the ball pan cavity. The pivot pin does not fulfill a force receiving function but only a securing function against a turning movement of the piston relative to the connecting rod in the shaft axis of the connecting rod.

According to a second embodiment the securing means comprises a clip, which clip encompasses at least the ball head adjacent to the flat portions and/or the shaft and the clip encompasses at least a part of the piston boss in order to secure the operating position of the ball head within the ball pan cavity. For example the clip forms a metallic wire like a cramp, and the cramp is arranged at or neighbouring to the small end and the piston boss in particular in a self-retaining manner.

According to another embodiment of the present invention the connecting rod features a shaft having a cross section with a main extension axis, which axis includes an angle of 90° with the main shaft axis. In particular, the cross section has an elliptic or an oval form whereas the main extension axis extends of the ellipse parallel to the small end axis. The small end features a neck portion in the transition of the shaft into the ball head. The neck portion is necessary to enable the receiving elements to enclose the ball head but the neck portion can be performed in a flat manner without a groove or a notch in the transition of the shaft into the ball head. This leads to an improved loading capacity, because the material cross section is not decreased and thus not debilitated. As a result the neck portion, in particular the depth of the recess forming the neck portion is smaller than known from the prior art.

According to another improvement of the inventive assembly the machining of the small end of the connecting rod is simplified due to the ball shape. A turning process and an external cylindrical grinding, respectively, are sufficient processes to machine the ball head. Compared to the prior art with a small end of the connecting rod formed by a curved cylinder, a turning process to machine the small end is a not possible manufacturing method, but is applicable to the ball head according to the present invention. Moreover this leads to improved tolerances and the surface quality of the ball head forming the small end of the connecting rod is improved compared to a part of a cylinder.

### PREFERRED EMBODIMENT OF THE INVENTION

Additional details, characteristics and advantages of the object of the present invention are disclosed in the subclaims and the following description of the respective figures which show preferred embodiments in an exemplary fashion of the subject matter according to the invention, in which
- figure 1: shows a perspective depiction of the piston-connecting rod assembly with a receiving plane,
- figure 2: a cross section with a section plane lying in the receiving plane,
- figure 3: a detailed depiction of the piston and the small end of the connecting rod featuring a securing means according to a first embodiment,
- figure 4: a detailed depiction of the piston and the small end of the connecting rod featuring a securing means according to a second embodiment, and
- figure 5: a perspective view of the piston - connecting rod assembly with a securing means according to the second embodiment.

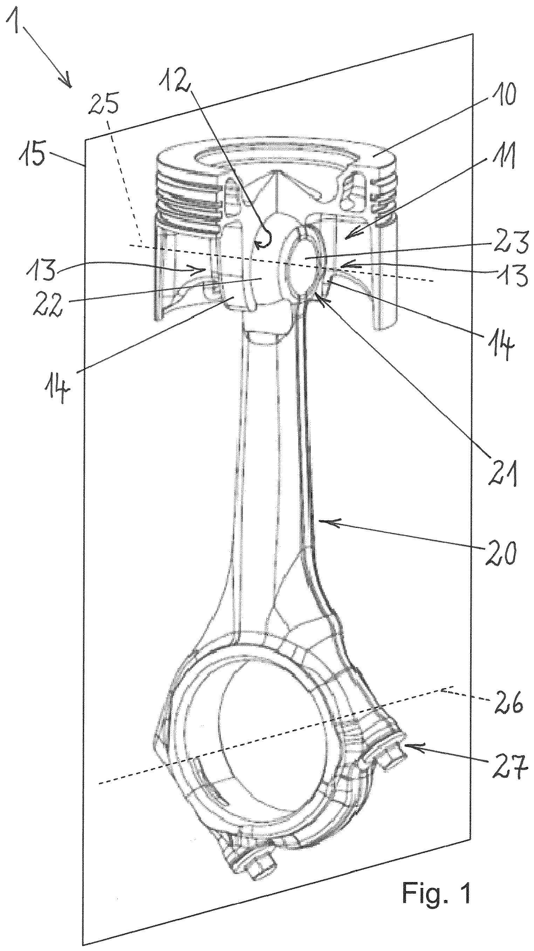

Fig. 1 shows a perspective depiction of a piston - connecting rod assembly 1 with the features of the present invention. The piston - connecting rod assembly 1 may form a part of an internal combustion engine, comprising a piston 10 which is received in a cylinder liner and with a connecting rod 20, which is connected to a crank shaft journal when the assembly 1 is assembled for operation in an internal combustion engine.

The piston 10 comprises a piston boss 11, and in the piston boss 11 is received a small end 21 of the connecting rod 20, and whereas a piston boss 11 features receiving elements 14, which define a receiving plane 15, which means, that the extension plane of the receiving elements 14 define the receiving plane 15. The receiving elements 14 enclose the small end 21 and form a positive fit between the small end 21 and the piston boss 11.

The connecting rod 20 features a big end eye 27 for receiving the hub journal of a crank shaft within the big end eye 27, and the big end eye 27 defines a big end axis 26, in which the hub journal extends when the connecting rod 20 is assembled to a crank shaft.

According to the invention the receiving plane 15 and the big end axis 26 extend parallel to one another.

The small end 21 of the connecting rod 20 features a ball head 22, which ball head 22 differs from a mathematical ball body by opposed flat portions 23, and the front flat portion 23 is depicted in the cut-off section of the piston 10. The piston boss 11 of the piston 10 features a ball pan cavity 12 with opposed open-side areas 13, whereas the ball head 22 is inserted into the ball pan cavity 12 by inserting the ball head 22 into the ball pan cavity 12.

The opposed flat portions 23 define a small end axis 25 running perpendicular through centers of the opposed flat portions 23, whereas the small end axis 25 extends perpendicular to the big end axis 26. In other words, the small end axis is distal arranged and extends with an angle of 90° onto the extension of the big end axis 26.

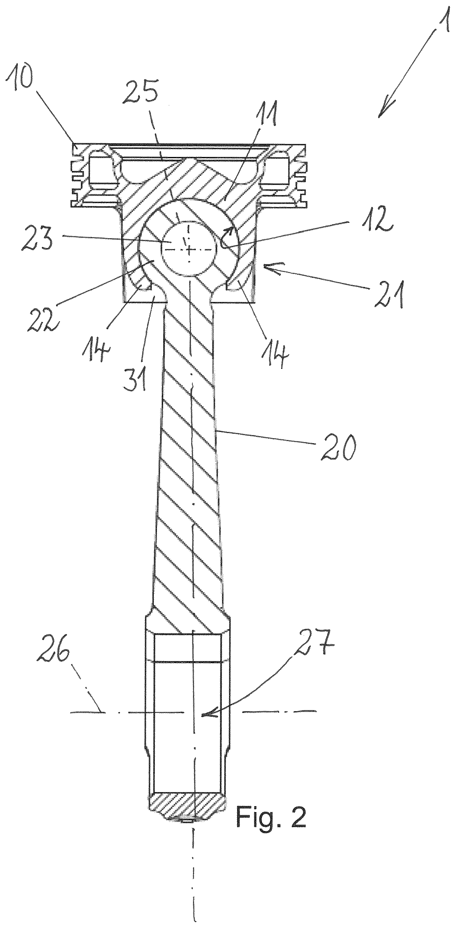

Fig. 2 shows a cross sectional view of the piston - connecting rod assembly 1, and the cross section falls into the receiving plane 15, see fig. 1. The viewing direction falls together with the small end axis 25, and the depiction illustrates that the big end axis 26 of the big end eye 27 extends perpendicular to the extension of the small end axis. The small end 21 of the connecting rod 20 is received in the piston boss 11 of the piston 10, and in between the small end 21 and the big end eye 27, the connecting rod 20 features a shaft 28.

Due to the cross section, the receiving elements 14 are shown and the enclosing angle of the receiving elements around the ball head 22 of the small end 21 amounts about 200° to 270°. The receiving elements 14 of the piston boss 11 define an inner ball pan cavity 12 for encompassing the ball head 22.

According to the invention, the receiving plane 15 defined by the receiving elements 14 are decoupled from the piston skirt 31 with respect to a direct force transmitting, which is arranged behind the piston boss 11 with respect to the line of side falling together with the small end axis 25. In other words, the force transmitting between the small end 21 of the connecting rod and the piston boss 11 happens lateral to the receiving elements 14 and bases on a force distribution within the entire piston. Due to this inventive aspect, the force distribution into the piston body 10 is improved and the piston skirt 31 does not fulfill a breathing movement, when the piston - connecting rod arrangement is in use within an internal combustion engine. In particular, the inertia forces in the top dead center, when the moving direction of the piston 10 reverses, the force from the connecting rod 20 onto the piston 10 affects an opening - bending of the receiving elements 14, but this opening bending does not transmit into the piston skirt 31 causing a periodic elliptic deformation behavior, presently called the "breathing".

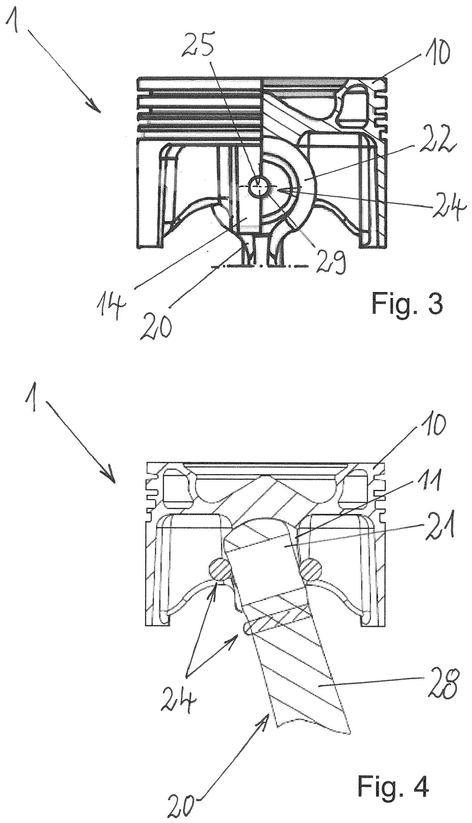

Fig. 3 shows a first embodiment of a securing means 24 between the piston 10 and the connecting rod 20. The securing means 24 is formed as a pivot pin 29, which pivot pin 29 extends through a hole within the receiving elements 14 and through a hole which is running through the ball head 22. The extension direction of the hole within the ball head 22 falls together with the small end axis 25. This pivot pin 29 does not fulfill a force-transmitting-function but the pivot pin 29 prevents a turning movement of the piston 10 against the connecting rod 20, when the piston - connecting rod assembly is in use. The securing means 24 is necessary in order to ensure that the positive fit between the receiving elements 14 and the ball head 22 is maintained active.

Fig. 4 shows another embodiment of a securing means 24 of the piston - connecting rod assembly 1 to ensure that the positive fit between the piston 10 and the connecting rod 20 is active. The securing means 24 forms a clip 30a or a clip 30b, which is embodied in a metallic wire and the clip 30a encompasses a part of the piston boss and the small end 21. Another embodiment of the clip 30b is shown in the neck portion of the connecting rod 20 in the transition area between the shaft 28 and the small end 21.

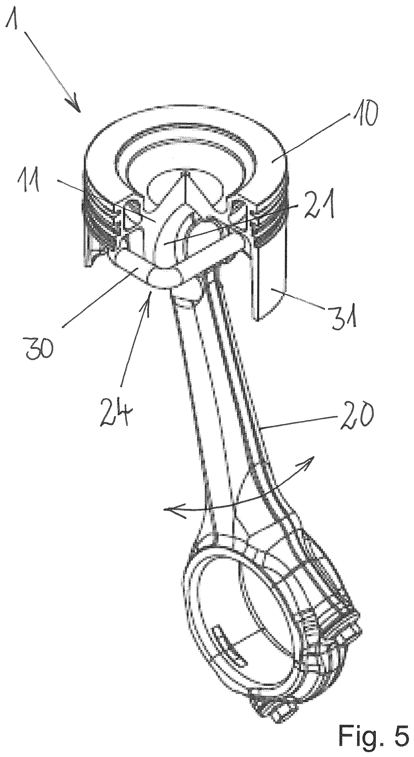

Finally, fig. 5 shows a perspective view of the piston - connecting rod assembly 1 with a piston and the connecting rod 20, and a part of the piston 10 is depicted with a cut-off section. In the cut- off section of the piston 10 the securing means 24 is visible, which is performed as a clip 30a, encompassing the piston boss 11 and the small end 21. The securing means 24 is arranged in a self-retentive manner at the piston 10 and the reciprocating pendular movement, shown with a double-arrow, is not influenced by the application of the securing means 24 in form of the clip 30a. The depiction shows that the clip 30a is arranged in the inner area of the piston skirt 31, and the clip 30a features a metallic wire with a circular cross section.

### List of numerals

- 1: piston - connecting rod assembly

- 10: piston
- 11: piston boss
- 12: ball pan cavity
- 13: open side area
- 14: receiving elements
- 15: receiving plane

- 20: connecting rod
- 21: small end
- 22: ball head
- 23: flat portion
- 24: securing means
- 25: small end axis
- 26: big end axis
- 27: big end eye
- 28: shaft
- 29: pivot pin
- 30a: clip
- 30b: clip
- 31: piston skirt

- I: mounting position
- II: operating position

## Claims

1. A piston - connecting rod assembly (1) for an internal combustion engine,
- comprising a piston (10) with a piston boss (11),
- in which piston boss (11) a small end (21) of a connecting rod (20) is received without a piston pin,
- whereas the piston boss (11) features receiving elements (14), said receiving elements (14) defining a receiving plane (15) in which the receiving elements (14) enclose said small end (21) and form a positive fit between the small end (21) and the piston boss (11),
- whereas the connecting rod (20) features a big end eye (27) defining a big end axis (26),
**characterized in that** the receiving plane (15) and the big end axis (26) extend parallel to one another.

2. A piston - connecting rod assembly (1) according to claim 1,
**characterized in that** the small end (21) of the connecting rod (20) features a ball head (22) modified with opposed flat portions (23), and the piston boss (11) of the piston (10) features a ball pan cavity (12) with opposed open side areas (13), whereas the ball head (22) is inserted into the ball pan cavity (12) by inserting the ball head (22) in a mounting position and by turning the ball head (22) within the ball pan cavity (12) into an operating position.

3. A piston - connecting rod assembly (1) according to claim 1 or 2, **characterized in that** the opposed flat portions (23) define a small end axis (25) running perpendicular through centers of the opposed flat portions (23), whereas the small end axis (25) extends perpendicular to the big end axis (26).

4. A piston - connecting rod assembly (1) according to claim 2 or 3, **characterized in that** the opposed flat portions (23) are arranged lateral to the receiving elements (14) of the piston boss (11) when the ball head (22) is turned within the ball pan cavity (12) into the operating position.

5. A piston - connecting rod assembly (1) according to one of the claims 2 to 4, **characterized in that** a securing means (24) is provided, in order to secure the operating position of the ball head (22) within the ball pan cavity (12).

6. A piston - connecting rod assembly (1) according to claim 5, **characterized in that** the securing means (24) comprises a pivot pin (29), which pivot pin (29) extends in the receiving plane (15) through the receiving elements (14) as well as through the ball head (22) in order to secure the operating position of the ball head (22) within the ball pan cavity (12).

7. A piston - connecting rod assembly (1) according to claim 5, **characterized in that** the securing means (24) comprises a clip (30), which clip (30) encompasses at least the ball head (22) adjacent to the flat portions (23) and/or the shaft (28) and the clip (30) encompasses at least a part of the piston boss (11) in order to secure the operating position of the ball head (22) within the ball pan cavity (12).
